# NEUE EUROPÄISCHE PATENTSCHRIFT

(11) **EP 2 544 943 B2**
(45) Veröffentlichungstag und Bekanntmachung des Hinweises auf die Entscheidung über den Einspruch: **04.08.2021**
(45) Hinweis auf die Patenterteilung: 24.08.2016
(21) Anmeldenummer: 11708725.4
(22) Anmeldetag: 08.03.2011
(51) Int. Cl.: B62D 65/18, B23K 37/047, B23K 37/04, B62D 65/02

(54) **VERFAHREN ZUM BETRIEB EINES FERTIGUNGSSYSTEMS ZUM FÜGEN UND FERTIGUNGSSYSTEM ZUM FÜGEN VON VORMONTIERTEN STRUKTUREN**
ASSEMBLY LINE AND CORRESPONDING PROCESS FOR JOINING THE ELEMETNS OF A STRUCTURE
PROCESS ET LIGNE D'ASSEMBLAGE DES ELEMENTS D'UNE STRUCTURE

(30) Priorität: 09.03.2010 DE 102010010814
(43) Veröffentlichungstag der Anmeldung: 16.01.2013
(73) Patentinhaber: Ebz Systec GmbH, 88212 Ravensburg (DE)
(72) Erfinder: STADLER, Rainer, 88605 Rast (DE); SCHMEH, Alexander, 88213 Ravensburg (DE)
(74) Vertreter: Otten, Roth, Dobler & Partner mbB Patentanwälte
(86) Internationale Anmeldenummer: PCT/EP2011/001131
(87) Internationale Veröffentlichungsnummer: WO 2011/110328

(56) Entgegenhaltungen:
- EP-A1- 0 438 989
- WO-A1-86/03153
- WO-A1-2006/082061
- DE-B3-102006 062 442
- DE-T2- 69 008 839
- DE-U1-202008 012 602
- JP-A- H07 303 996
- US-A1- 2002 056 189
- US-A1- 2007 245 537

## Beschreibung

Die Erfindung betrifft ein Verfahren zum Betrieb eines Fertigungssystems zum Fügen und ein Fertigungssystem zum Fügen gemäß dem Oberbegriff des Anspruchs 1 bzw. des Anspruchs 3. Ein solches Verfahren bzw. System sind aus der WO 2006 082 061 A1 bekannt. Aus der DE 690 08 839 T2 ist eine Einrichtung zum Schweißen von aus gepresstem Blech bestehenden Baugruppen von Motorfahrzeugkarosserien bekannt. Durch eine Vielzahl von seriell angeordneten Stationen, welche von einem mit den Blechen bestückten Bauteilträger durchlaufen werden ist diese Einrichtung sehr raumintensiv und erfordert eine Vielzahl von Fördereinrichtungen und eine Vielzahl von Bauteilträgern, da diese für jedes Teil in jeder der Vielzahl von Stationen benötigt werden.

Weiterhin ist aus der US 2002/0056189 A1 ein Herstellungsverfahren, bei welchem ein Handhabungsroboter eine erst teilweise fertig gestellte Struktur aus einer Spannvorrichtung entfernt, sowie ein Fertigungssystem bekannt.

Es ist Aufgabe der Erfindung, ein Verfahren zum Betrieb eines Fertigungssystems zum Fügen und ein Fertigungssystem zum Fügen vorzuschlagen, welches durch eine kurze Bedarfsdauer des oder der Bauteilträger für die Herstellung eines Fertigteils bzw. einer Baugruppe mit einer geringeren Zahl an Bauteilträgern auskommt und welches einen geringeren Raumbedarf trotz hoher Flexibilität hat.

Diese Aufgabe wird ausgehend von den Merkmalen des Oberbegriffs des Anspruchs 1 bzw. des Anspruch 3 durch die kennzeichnenden Merkmale des Anspruchs 1 bzw. des Anspruchs 3 gelöst. In den Unteransprüchen sind vorteilhafte und zweckmäßige Weiterbildungen angegeben.

Bei dem erfindungsgemäßen Verfahren zum Betrieb eines Fertigungssystems zum Fügen, Transportieren und Handhaben von vormontierten Strukturen, wird die vormontierte Struktur nach dem Fügen der Geo-Verbindungen durch den oder die Fügeroboter, welche der zu montierenden Struktur eine Grundstabilität verleihen, durch einen der Fügeeinheit zugeordneten zweiten Manipulator von dem Bauteilträger abgehoben, wobei die Transporteinheit den Bauteilträger in die Beladeeinheit zurückfördert während der bzw. die Fügeroboter in der abgehobenen Position an der durch Geo-Punkte stabilisierten Struktur Ausfüge-Verbindungen herstellt bzw. herstellen, wobei zeitlich parallel hierzu der Bauteilträger in der Beladeeinheit von einem ersten Manipulator mit einer zweiten vormontierten Struktur bestückt wird und wobei die fertig gefügte Struktur von dem zweiten Manipulator aus dem Fertigungssystem entladen wird bevor der neu bestückte Werkstückträger mit der zweiten vormontierten Struktur in die Fügeeinheit eingefahren wird. Durch ein Fertigfügen der Struktur in einer Schwebeposition ist es möglich, den Bauteilträger vor dem Ende der Fügeoperationen aus der Fügeeinheit zu entnehmen und in der Beladeeinheit wieder zu bestücken. Hierdurch wird die Zeitdauer, in welcher der Bauteilträger mit der Struktur verbunden ist verkürzt, so dass mit einem räumlich kompakten Fertigungssystem mit einer minimalen Ausrüstung an Fügerobotern und Werkstückträgern ein hoher Durchsatz erreichbar ist.

Ein Aspekt der Erfindung ist ein Verfahren, bei welchem der Werkstückträger vor der Fertigstellung der Struktur bzw. vor Abschluss aller Fügearbeiten von der herzustellenden Struktur getrennt und der Fügeeinheit entnommen wird.

Erfindungsgemäß ist vorgesehen, einen der Bauteilträger aus einer Arbeitsebene, in welcher die Geo-Verbindungen ersteilt werden, herauszubewegen und unter oder über der Arbeitsebene in einer Rückführebene insbesondere durch einen Tunnel unter der Fügeeinheit von der Hubeinheit zu der Beladeeinheit zu fördern und die Beladeeinheit zur Übernahme des rückgeförderten Bauteilträgers in die Rückführebene bzw. Arbeitsebene anzuheben oder abzusenken, wobei hierzu die Fügeeinheit zwischen der Beladeeinheit und der Hubeinheit angeordnet ist und das Fertigungssystem wenigstens einen zweiten Bauteilträger zur Aufnahme einer zweiten Art bzw. weiteren Arten von vormontierten Strukturen aufweist. Mit einem derartigen Ablauf ist es möglich durch eine geringe Erweiterung eines im Wesentlichen aus der Beladeeinheit und der Fügeeinheit bestehenden Grundsystems ein Fertigungssystem zu schaffen, das die Produktion mit zwei unterschiedlichen Werkstückträgern erlaubt.

Die Erfindung sieht vor, dass der Hubeinheit wenigstens eine Parkeinheit zugeordnet ist, in welcher einer der Bauteilträger bei Nicht-Bedarf auf der Arbeitsebene und/oder auf der Rückführebene aus einem Bauteilträgerkreislauf ausgeschleust wird und/oder aus welcher einer der Bauteilträger bei Bedarf auf der Arbeitsebene und/oder auf der Rückführebene in einen Bauteilträgerkreislauf eingeschleust wird. Durch ein Verfahren, welches auch das Einschleusen und Ausschleusen von Werkstückträgem in eine oder mehrere Parkeinheften umfasst wird die Zahl der in dem Fertigungssystem betrelbbaren, unterschiedlichen Bauteilträger weiter erhöht.

Erfindungsgemäß ist es auch vorgesehen, einen der Bauteilträger bel Nicht-Bedarf auf der Rückführebene aus einem Bauteiltrigerkreislauf in eine als Tiefparkeinheit ausgebildete Parkeinheit auszuschleusen und/oder einen der Bauteilträger bei Bedarf auf der Rückführebene aus der Tiefparkeinheit in den Bauteilträgerkreislauf einzuschleusen, wobei hierzu entsprechende Tiefparkeinheiten insbesondere unter dem ersten Manipulator und/oder insbesondere unter dem zweiten Manipulator und/oder insbesondere unter einem oder mehreren der Fügeroboter angeordnet sind. Durch eine derartige ablaufmäßige Integration von weiteren Parkmöglichkeiten ist mit geringstem Raumaufwand eine funktionsmäßige Erweiterung des Fertigungssystems möglich.

### Das erfindungsgemäße Fertigungssystems zum Fügen

Transportieren und Handhaben von vormontierten Strukturen, insbesondere von Kraftfahrzeugkarosseriebaugruppen, welche durch zuvor lose montierte Bauteile gebildet sind, umfasst eine Fügeeinheit, welche mit einem Manipulator ausgestattet ist, durch den die durch Geo-Punkte stabilisierte Struktur von dem Bauteilträger in eine Fertigfüge-Position abhebbar ist, in welcher die Fügeroboter die noch auszuführenden Fügungen durchführen, wobei der Bauteilträger aus der Fügeeinheit in die Beladeeinheit zurückförderbar ist während der bzw. die Fügeroboter Ausfüge-Verbindungen herstellt bzw. herstellen. Durch den Einsatz eines Manipulators, welcher die noch nicht vollständig gefügte aber stabilisierte Struktur in einer für die Fügeroboter erreichbaren Schwebeposition so hält, dass der Bauteilträger in die Beladeeinheit zurückgefahren werden kann, ist eine intensive Nutzung des Bauteilträger bei einem gleichzeitig kompakten Aufbau des Fertigungssystems gegeben. Insbesondere kann auf eine zweite Fügeeinheit, welche Bauraum und weitere Fügeroboter erfordert, verzichtet werden.

Die Erfindung sieht vor, die Fügeeinheit zwischen der Beladeeinheit und einer Hubeinheit zu positionieren und das Fertigungssystem mit wenigstens einem zweiten Bauteilträger zur Aufnahme einer zweiten Art bzw. weiteren Arten von vormontierten Strukturen auszustatten, wobei einer der Bauteilträger aus einer Arbeitsebene, in welcher die Geo-Verbindungen ersteilt werden, herausbewegbar ist und unter oder über der Arbeitsebene in einer Rückführebene von der Hubeinheit zu der Beladeeinheit förderbar ist und wobei die Beladeeinheit zur Übernahme des rückgeförderten Bauteilträgers in die Rückführebene anhebbar oder absenkbar ist. Hierdurch ist es mit minimalem Bauaufwand möglich einen Kreislaufbetrieb zu fahren, bei welchem der erste Bauteilträger aus der Fügeeinheit in die Hubeinheit ausgeschleust wird, der zweite Bauteilträger aus der Beladeeinheit in die Fügeeinheit eingeschleust wird und der erste Bauteilträger über die Rückführebene an die Beladeinheit zurückgeführt wird.

Es sieht die Erfindung vor, das Fertigungssystem um wenigstens eine Parkeinheit zu ergänzen, welche benachbart zu der Hubeinheit angeordnet ist und auf der Arbeitsebene und/oder auf der Rückführebene einen Parkplatz für einen der Bauteilträger aufweist,
wobei einer der Bauteilträger bei Nicht-Bedarf aus einem Bauteliträgerkreislauf auf einen der Parkplätze ausschleusbar ist und/oder wobei einer der Bauteilträger bei Bedarf in einen Bauteilträgerkreislauf eingeschleusbar ist. Hierdurch ist es möglich die Zahl der unterschiedlichen Bauteilträger, welche in dem Fertigungssystem betrieben werden können, durch kostengünstig herstellbare Parkeinheiten zu erhöhen.

Schließlich sieht die Erfindung vor, das Fertigungssystem um wenigstens eine Parkeinheit zu ergänzen, welche als Tiefparkeinheit ausgebildet ist, welche insbesondere unter dem ersten Manipulator und/oder insbesondere unter dem zweiten Manipulator und/oder insbesondere unter einem der Fügeroboter angeordnet ist, wobei einer der Bauteilträger bei Nicht-Bedarf auf der Rückführebene aus einem Bauteilträgerkreislauf in die Tiefparkeinheit ausschleusbar ist und/oder wobei einer der Bauteilträger bei Bedarf auf der Rückführebene aus der Tiefparkeinheit in den Bauteilträgerkreislauf einschleusbar ist. Durch derartige Tiefparkeinheiten ist das Fertigungssystem, ohne dass zusätzliche Fläche benötigt wird, auf eine noch größere Anzahl unterschiedlicher Typen von Bauteilträgern erweiterbar, da die Fläche, welche für die Manipulatoren und den oder die Fügeroboter erforderlich ist, zusätzlich genutzt wird.

Die in den Unteransprüchen beschriebenen komplexeren Fertigungssysteme bringen den Vorteil eines optimierten Handlings der Bauteilträger mit sich, durch welches es möglich ist, der Beladestation entsprechend dem Fertigungsprogramm den jeweils benötigten Bauteilträger zur Verfügung zu stellen, ohne dass hierfür ein langer logistischer Vorlauf erforderlich ist. Somit ist es möglich, mit dem Fertigungssystem auch kurzfristig auf Änderungen im Fertigungsprogramm zu reagieren oder Bauteilträger entsprechend der anstehenden Anforderung in der Beladestation bereit zu stellen. Durch ein derart flexibles Fertigungssystem können teure Stillstandzeiten vermieden werden. Grundsätzlich ist es für das Fertigungssystem ausreichend, dass erst dann über den nächsten zu bestückenden Bauteilträger entschieden wird, wenn der vorhergehende Bauteilträger fertig mit Bauteilen bestückt in die Fügeeinheit gefördert wird. Dieser kann der Beladeeinheit dann aus jeder im Fertigungssystem vorhandenen Parkeinheit zur Verfügung gestellt werden.

Im Sinne der Erfindung werden unter Geo-Verbindungen, welche als Geo-Punkte oder Geo-Nähte ausgeführt werden, diejenigen gefügten Verbindungen verstanden, welche eine Eigenstabilität der aus einzelnen Bauteilen herzustellenden Baugruppe gewährleisten, so dass die herzustellende Baugruppe bzw. die herzustellende Struktur ohne nachteilige Veränderung ihrer Geometrie von dem Bauteilträger abgenommen werden kann. Entsprechend werden unter Ausfüge-Verbindungen, welche als Ausschweißpunkte oder Ausschweißnähte ausgeführt werden, diejenigen gefügten Verbindungen verstanden, welche zur Hersteilung der Eigenstabilität der Baugruppe bzw. der herzustellenden Struktur Werkstücks nicht erforderlich sind, aber z.B. dessen Stabilität erhöhen.

Unter "Fügen" wird im Sinne der Erfindung das dauerhafte Verbinden von wenigstens zwei Bauteilen und insbesondere Schweißen und/oder Kleben und/oder Clinchen und/oder Stanznieten verstanden.

Als Bauteile, welche zur Herstellung der Baugruppe bzw. des Fertigteils Verwendung finden sind im Sinne der Erfindung insbesondere Blechbauteile und/oder Kunststoffbauteile und/oder Sandwichbauteile vorgesehen, die dann durch eines oder mehrere der genannten Fügeverfahren zu der Baugruppe bzw. dem Fertigteil verbunden werden.

Weitere Einzelheiten werden in der Zeichnung anhand von schematisch dargestellten Ausführungsbeispielen beschrieben.

Hierbei zeigt
- Figur 1a:: eine Draufsicht auf eine Ausführungsvariante eines Fertigungssystems, welches für den Betrieb mit einem Bauteilträgertypen ausgelegt ist;
- Figur 1b:: eine vereinfachte, teilweise perspektivische Ansicht des in der Figur 1 gezeigten Fertigungssystems in realitätsnäherer Darstellung;
- Figur 2a - 2f:: ein Verfahrensablauf bei einem Fertigungssystem, welches im grundsätzlichen Aufbau dem in der Figur 1a gezeigten Fertigungssystem entspricht;
- Figur 3a, 3b:: eine Ausführungsvariante eines Fertigungssystems in Draufsicht und Seitenansicht, welches für den Betrieb mit bis zu 2 Bauteilträgertypen ausgelegt ist;
- Figur 4:: eine Ausführungsvariante eines erfindungsgemäßen Fertigungssystems in Draufsicht, welches für den Betrieb mit bis zu 3 Bauteilträgertypen ausgelegt ist;
- Figur 5:: eine Ausführungsvariante eines erfindungsgemäßen Fertigungssystems in Draufsicht, welches für den Betrieb mit bis zu 4 Bauteilträgertypen ausgelegt ist;
- Figur 6:: eine Ausführungsvariante eines erfindungsgemäßen Fertigungssystems in Draufsicht, welches für den Betrieb mit bis zu 6 Bauteilträgertypen ausgelegt ist;
- Figur 7:: eine Ausführungsvariante eines erfindungsgemäßen Fertigungssystems in Draufsicht, welches ebenfalls für den Betrieb mit bis zu 6 Bauteilträgertypen ausgelegt ist und
- Figur 8:: eine Ausfühungsvariante eines erfindungsgemäßen Fertigungssystems in Draufsicht, welches für den Betrieb mit bis zu 11 Bauteilträgertypen ausgelegt ist.

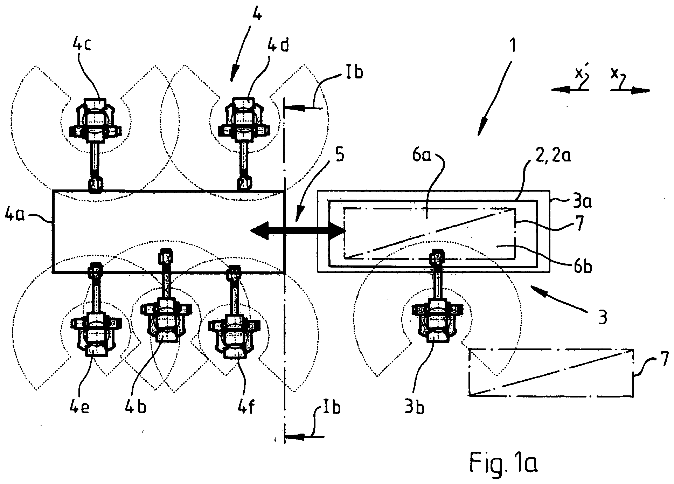

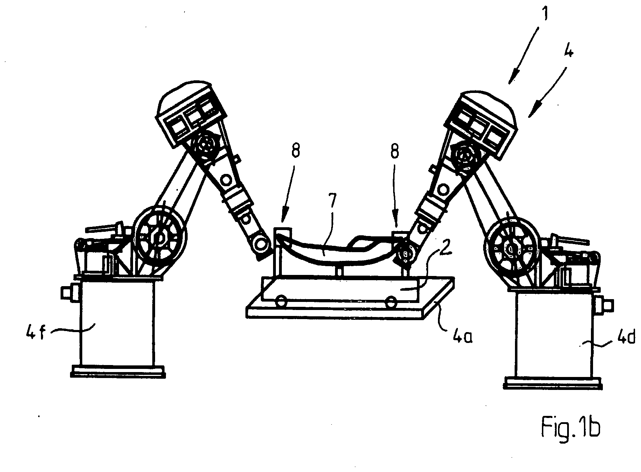

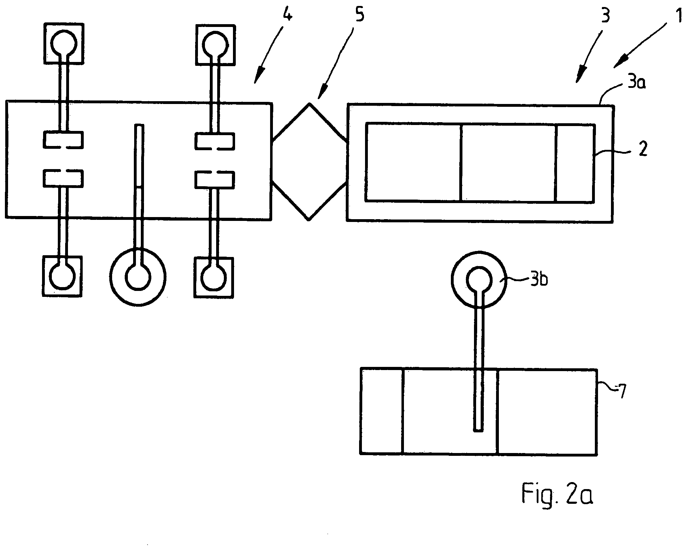

In der Figur 1a ist eine Draufsicht auf eine **nicht** unter die Ansprüche 1 und 3 fallende Ausführungsvariante eines Fertigungssystems 1 gezeigt, welches tur den Betreb mit einem Bauteilträger 2 eines ersten Typs 2a ausgelegt ist. Das Fertigungssystem 1 umfasst im Wesentlichen eine Beladeeinheit 3, eine Fügeeinheit 4 und eine Transporteinheit 5, welche in der Figur 1 lediglich durch einen Doppelpfeil symbolisiert ist. Mittels der Transporteinheit 4 ist der Bauteilträger 2 in eine Pfeilrichtung x' aus der Beladeinheit 3 in die Fügeeinheit 5 und in eine Pfeilrichtung x aus der Fügeeinheit 5 in die Beladeeinheit 3 förderbar. Die Beladeinheit 3 umfasst einen Tisch 3a und einen ersten Manipulator 3b. Mit dem ersten Manipulator 3a wird eine aus wenigstens zwei Bauteilen 6a, 6b bestehende Struktur 7 eines ersten Typs auf den Bauteilträger 2 des ersten Typs 2a gesetzt. Der Bauteilträger 2 dient als Spannvorrichtung bzw. Geometrievorrichtung für die Bauteile 6a und 6b, in welcher dieser entsprechend den Erfordernissen zueinander positioniert werden. Weitere Strukturen 7 liegen neben der Beladeeinheit 3 bereit. Die Fügeeinheit 4 umfasst einen Tische 4a, eine zweiten Manipulator 4b und vier Fügeroboter 4c, 4d, 4e und 4f. Die vormontierte Struktur 7 wird mittels der Transporteinheit 5 mit dem Bauteilträger 2 in die Fügeeinheit 4 verfahren, um dort zu einer fertigen Struktur gefügt zu werden. Ein entsprechender Ablauf ist in den Figuren 2a bis 2f dargesteilt.

Zuvor wird noch auf die Figur 1b verwiesen, welche in vereinfachter, teilweise perspektivischer Ansicht eine realitätsnahe Darstellung des in der Figur 1 gezeigten Fertigungssystems 1 entsprechend einem in der Figur 1a angegebenen Schnittverlauf Ib-Ib zeigt. In dieser Darstellung sind die Fügeroboter 4f und 4d erkennbar, wobei der Bauteilträger 2 mit der zu fügenden Struktur bereits auf dem Tisch 4a der Fügeeinheit 4 steht und die Fügeroboter 4d, 4f bereits Geo-Verbindungen 8 herstellen.

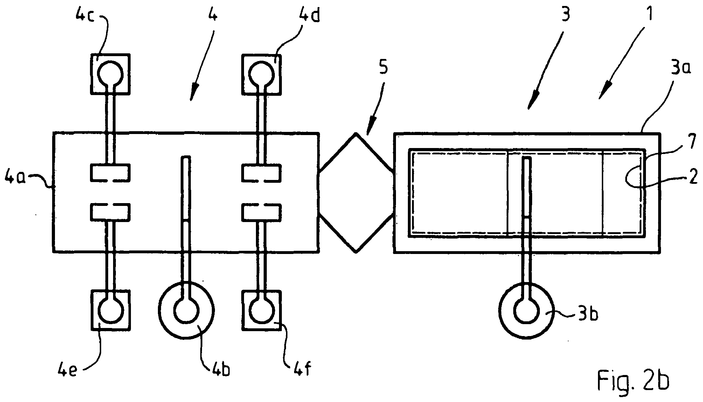

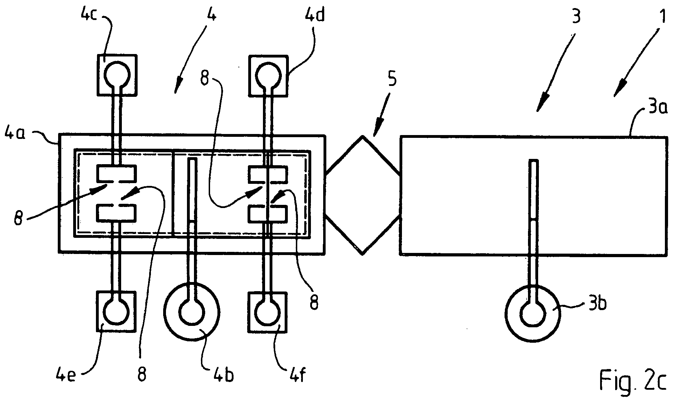

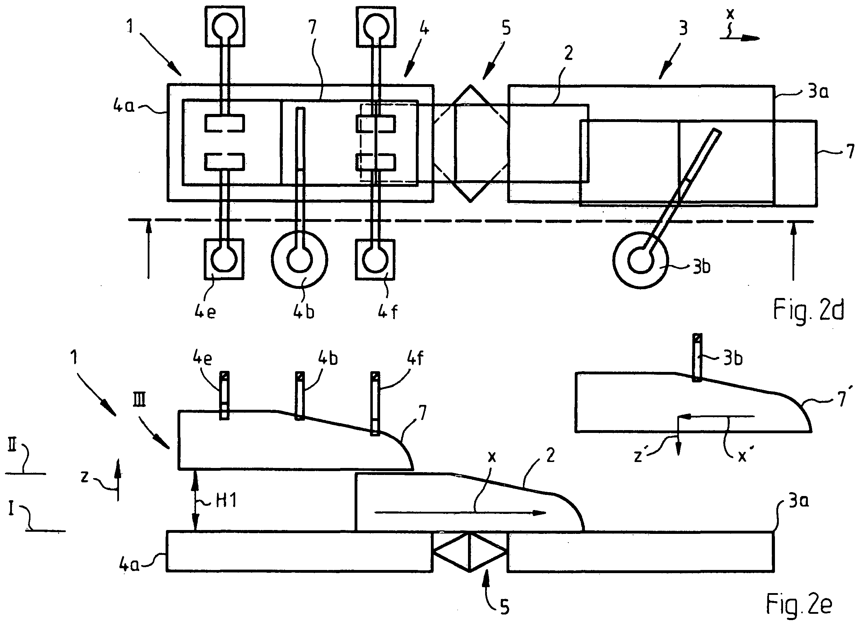

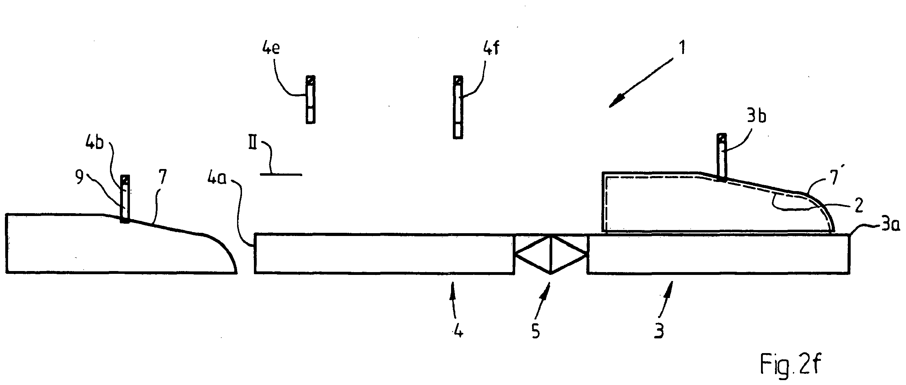

In den Figuren 2a - 2f ist ein Verfahrensablauf an einem Fertigungssystem gezeigt, welches im grundsätzlichen Aufbau dem in der Figur 1a gezeigten Fertigungssystem entspricht. Insofern wird auch auf die Beschreibung zu der Figur 1a verwiesen. Die Figur 1a zeigt das Fertigungssystem 1 mit den bereits erwähnten Komponenten Beladeeinheit 3, Fügeeinheit 4 und Transporteinheit 5. Der Manipulator 3b der Beladeeinheit 3 greift gerade die vormontierte Struktur 7, um diese auf den Bauteilträger 2, welcher auf dem Tisch 3a der Beladestation 3 liegt, abzusetzen. In der Figur 2b ist dann gezeigt wie die vormontierte Struktur 7 auf dem Bauteilträger 2 liegt. Die Figur 2c zeigt wie der Bauteilträger 2 mit der vormontierten Struktur 7 von der Transporteinheit 5 auf den Tisch 4a der Fügeeinheit 4 transportiert wurde und die Fügeroboter 4c, 4d, 4e und 4f die Geo-Verbindungen 8 fügen. In der Figur 2d ist nun gezeigt, wie der zweite Manipulator 4b der Fügeeinheit 4 die durch das Setzten der Geo-Verbindungen 8 stabilisierte Struktur 7 von dem Bauteilträger 2 abgehoben hat und der Bauteilträger 2 gerade von der Transporteinheit 5 in die Beladestation 3 in die Pfeilrichtung x zurückgefahren wird. Parallel hierzu wird von dem Manipulator 3b der Beladeeinheit 3 eine weitere Struktur 7' gegriffen, um diese in einem weiteren Schritt auf den Bauteiiträger 2 zu setzen, wenn dieser wieder in der Beladeeinheit 3 angekommen ist. Die in der Figur 2d in Draufsicht dargestellte Situation ist entsprechend der in der Figur 2d gezeigten Schnittlinie IIe-IIe in der Figur 2e in Schnitt- bzw. Seitenansicht gezeigt. Hier ist erkennbar wir die durch die Geo-Verbindungen stabilisierte Struktur 7 von dem Manipulator 4b in Pfeilrichtung z von dem Tisch 4a der Fügestation von einem Geo-Niveau I auf ein Ausfüge-Niveau II um eine Höhe H1 in eine Fertigfüge-Position III angehoben wird. Hierbei ist die Höhe H1 so bemessen, dass der Bauteilträger 2 in Pfeilrichtung x unter der angehobenen Struktur 7 kollisionsfrei von der Transporteinheit 5 in die Beladeeinheit 3 verfahrbar ist. Die Transporteinheit ist in den Figuren 2a bis 2f nur rein schematisch dargestellt. In der praktischen Ausführung setzt umfasst die Transporteinheit wenigstens ein Fördermittel, zugehörige Sensoren und eine Steuereinheit. Für die weitere vormontierte Struktur 7' ist in der Figur 2e mit Pfeilen angedeutet, wie diese in die Pfeilrichtungen x' und z' bewegt wird, um später-wie in der Figur 2f gezeigt- auf dem Bauteilträger 2 abgesetzt zu werden. Zu dem Zeitpunkt, zu dem die Struktur 7' auf den Bauteilträger 2 aufgesetzt ist oder kurz vor diesem Zeitpunkt oder kurz nach diesem Zeitpunkt hat der zweite Manipulator 4b die zwischenzeitlich vollständig gefügte erste Struktur 7 abgesetzt und bewegt seinen Greifer 9 wieder in die in der Figur 2a gezeigte Position, um nach dem Erstellen von Geo-Verbindungen an derzweiten Struktur 7' diese auf das Ausfüge-Niveau II anheben zu können.

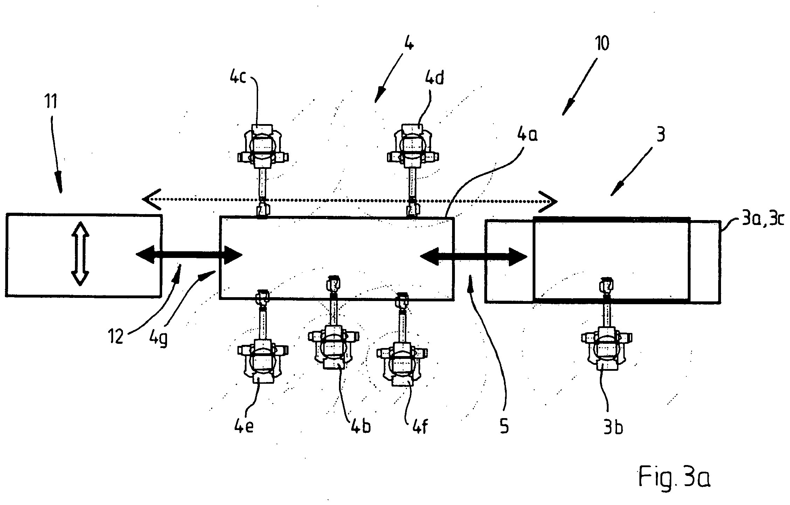

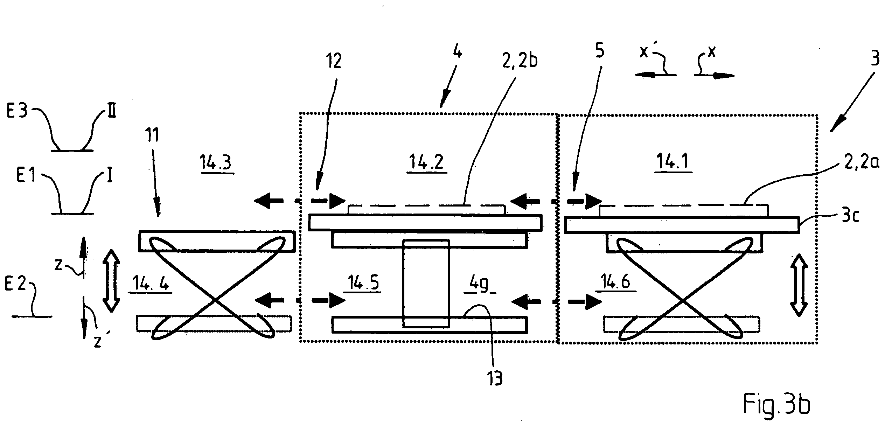

In den Figuren 3a und 3b ist eine weitere, nicht unter die Ansprüche 1 und 3 fallende Ausführungsvariante eines Fertigungssystems 10 in Draufsicht und Seitenansicht dargestellt, wobei diese Fertigungssystem, für den Betrieb mit bis zu zwei Bautellträgertypen 2 bzw. 2a, 2b ausgelegt ist. Das Fertigungssystem 10 baut auf dem in den Figuren 1a bis 2f gezeigten Fertigungssystem auf und umfasst ebenfalls eine Beladeienheit 3, eine Fügeeinheit 4 und eine erste Transporteinheit 5 auf. Zusätzlich umfasst das Fertigungssystem 10 eine Hubeinheit 11 und eine zweite Transporteinheit 12. Die Beladeeinheit 3 umfasst in bekannter Weise einen Tisch 3a und einen Manipulator 3b. Im Unterschied zu der ersten Ausführungsvariante ist der Tisch 3a als Hubtisch 3c ausgeführt. Die Fügeeinheit 4 umfasst in bekannter Weise einen Tisch 4a einen Manipulator 4b und Fügeroboter 4c, 4d, 4e und 4f. Im Unterschied zu der ersten Ausführungsvariante weist der Tisch 4a einen Tunnel 4g auf. In der Figur 3a ist weiterhin ein Bauteiiträger 2 gezeigt, welcher sich in der Beladeeinheit 3 befindet. Der Bauteilträger 2 wird auch als "Skid" oder Ladegestell oder Ladeschlitten bezeichnet. In der Figur 3b ist das Fertigungssystem 10 in vereinfachter Seitenansicht gezeigt. Sowohl die eigenständige Hubeinheit 11 als auch der Hubtisch 3c der Beladeinheit sind von Einer Arbeitsebene E1, welche dem Geo-Niveau I entspricht, in eine Rückführebene E2 und zurück verfahrbar. Der Tunnel 4g der Fügestation 4 liegt mit seinem Boden 13 ebenfalls auf der Rückführebene E1. Entsprechend sind die Bauteliträger 2 bzw. 2a, 2b durch die Transporteinheiten 5 und 12 in die Richtungen x und x' und durch die Hubeinheit 11 und den Hubtisch 4g der Beladeeinheit 3 in die Richtungen z und z' verfahrbar. Ein Ausfügeniveau II, in welches eine nicht dargestellte Struktur nach dem fügen der Geo-Verbindungen von dem Manipulator 4b angehoben wird, liegt auf einer Ebene E3 über der Ebene E2. Für den Betrieb des Fertigungssystems 10 sind prinzipiell zwei Abläufe vorgesehen. Bei einem Kreisbetrieb ist es vorgesehen den Bauteilträger 2b nach dem Abheben der nicht dargestellten Struktur in die Position 14.3 zu verfahren und den bestückten Bauteilträger 2a aus der Position 14.1 in die Position 14.2 zu verfahren. Während an der nicht dargestellten Struktur die Ausfüge-Verbindungen ersteilt werden und während anschließend an der mit dem Bauteilträger 2a angelieferten weiteren Struktur die Geo-Verbindungen erstellt werden, wird der leere Bauteilträger von der Hubeinheit 11 auf die Ebene E2 in die Position 14.4 abgesenkt und dann durch den Tunnel 4g über die Position 14.5 auf den abgesenkten Hubtische 3c der Beladeeinheit 3 in die Position 14.6 gefahren und dann von diesem in die Position 14.1 auf die Ebene E1 angehoben um mit einer vormontierten Struktur bestückt zu werden und dann von der Transporteinheit 12 wieder auf die Position 14.2 gefahren zu werden, wenn der Bauteilträger 2b diese verlassen hat. Die Transporteinheiten 5 und 12 sorgen sowohl für den Transport auf der Ebene E1 als auch für den Transport auf der Ebene E2. Alternativ zu dem Kreisbetrieb ist auch ein Pendelbetrieb möglich, bei welchem nur mit einem der beiden Bauteilträger 2a, 2b produziert wird und der andere Bauteilträger parkt bis er wieder benötigt wird. Hierzu wird zum Beispiel der Bauteilträger 2b aus der Position 14.2 in die Position 14.3 verfahren und in der Hubeinheit 11 geparkt, während der Bauteilträger 2a wie bei dem in den Figuren 1a bis 2f beschriebenen Ausführungsbeispiel ständig zwischen den Positionen 14.1 und 14.2 pendelt. Als Parkpositionen stehen für den Bauteilträger 2b die Positionen 14.3, 14.4 und 14.5 zur Verfügung. Sofern der Bauteilträger 2b in der Position 14.5 geparkt wird ist während des Betriebs der Anlage sogar eine Wartung des Hubtisches 11 möglich. Weiterhin ist es bei dem Pendelbetrieb auch möglich den Bauteilträger 2b gegen einen anderen Bauteilträger auszutauschen ohne dass die Fertigung unterbrochen werden muss. Bei einer entsprechenden Planung des Produktionsablaufs können auf diese Welse Stillstandszeiten des Fertigungssystems 10 vermieden werden.

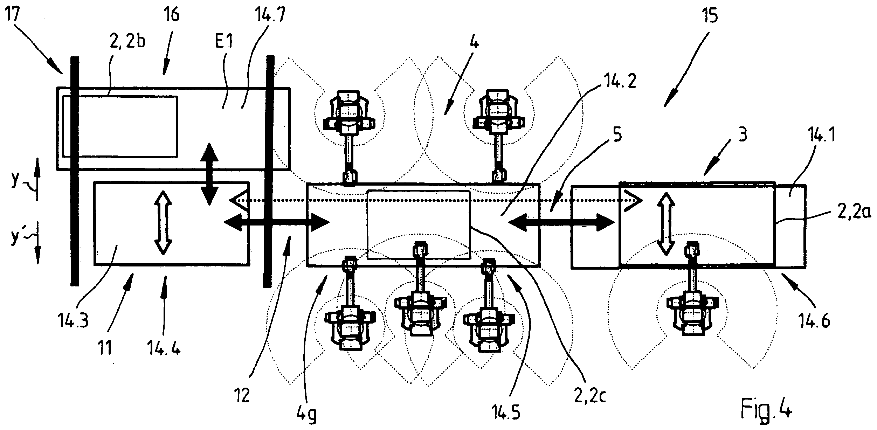

### Die Figur 4 zeigt in Draufsicht eine

Ausführungsvariante eines erfindungsgemäßen Fertigungssystems 15, welches für den Betrieb mit bis zu drei unterschiedlichen Bauteilträger 2 bzw. 2a, 2b und 2c ausgelegt ist. Bezüglich der Komponenten Beladeeinheit 3, Fügeeinheit 4, Transporteinheit 5, Hubeinheit 11 und Transporteinheit 12 und eines Kreisbetriebs über die Stationen 14.1 bis 14.6 wird auf die Ausführungen zu den Figuren 3a und 3b verwiesen. Zusätzlich zu diesen Komponenten umfasst das Fertigungssystem 15 eine Parkeinheit 16 und eine dritte Transporteinheit 17. Mittels der dritten Transporteinheit 17, welche als Querförderer ausgebildet ist, ist es möglich auf der Arbeitsebene E1 einen der Bauteilträger 2 von der Hubeinheit 11 in Pfeilrichtung y in die Parkeinheit 16 auszuschleusen oder - wie in der Darstellung gezeigt - den Bauteilträger 2b aus der Parkeinheit 16 auf die Hubeinheit 11 in Pfeilrichtung y' auszuschleusen. Sofern erforderlich kann in der dargestellten Situation der Bauteilträger 2b der Parkeinheit 16 entnommen werden und durch ein anschließendes Absenken der Hubeinheit 11 durch den Tunnel 4g der Fügeeinheit 4 zu der Beladeeinheit 3 gefahren werden. Sobald die Hubeinheit 11 wieder auf der Ebene E1 steht kann der Bauteilträger 2c in die Parkeinheit 16 bzw. in eine Position 14.7 ausgeschleust werden. Sofern nicht ein Kreisbetrieb gefahren wird, bei welchem alle drei Bauteilträger 2a, 2b und 2c seriell im Einsatz sind, ist es durch die Parkeinhelt 16 möglich die Position 14.7 dazu zu nutzen einen der drei Bauteilträger 2a, 2b oder 2c aus dem Kreisbetrieb zu nehmen und diesen nur mit zwei der Bauteilträger 2 zu fahren. Ein Pendelbetrieb eines der Bauteilträger 2 zwischen den Positionen 14.2 und 14.1 ist dann ebenfalls möglich.

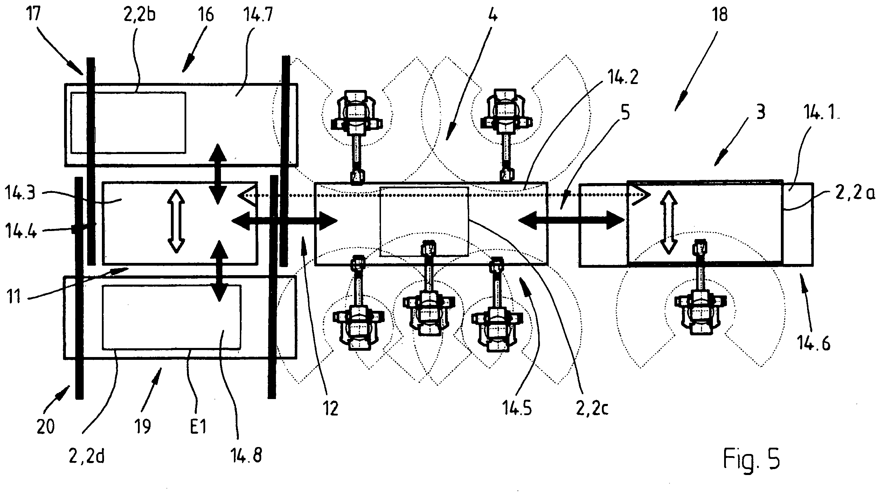

In der Figur 5 ist eine Ausführungsvariante eines erfindungsgemäßen Fertigungssystems 18 in Draufsicht gezeigt, welches für den Betrieb mit bis zu vier unterschiedlichen Bauteilträgem 2 bzw. 2a, 2b, 2c, 2d ausgelegt ist. Hierwird zunächst auf die Beschreibungen zu den Figuren 1a bis 2f und 3a, 3b und 4 verwiesen. Bezüglich der Komponenten Beladeeinheit 3, Fügeeinheit 4, Transporteinheit 5, Hubeinheit 11, Transporteinheit 12, Parkeinheit 16 und Transporteinheit 17 und eines Kreisbetriebs bzw. Pendelbetriebs über die Stationen 14.1 bis 14.7 wird besonders auf die Ausführungen zu der Figur 4 verwiesen. Zusätzlich zu diesen Komponenten umfasst das Fertigungssystem 18 eine zweite Parkeinheit 19 und eine vierte Transporteinheit 20. Mittels der vierten Transporteinheit 20, welche als Querförderer ausgebildet ist, ist es möglich auf der Arbeitsebene E1 einen der Bauteilträger 2 von der Hubeinheit 11 in die Parkeinheit 19 auszuschleusen. Somit steht mit einer Position 14.8 im Vergleich zu dem in der Figur 4 gezeigten Fertigungssystem eine weitere Parkmöglichkeit zur Verfügung.

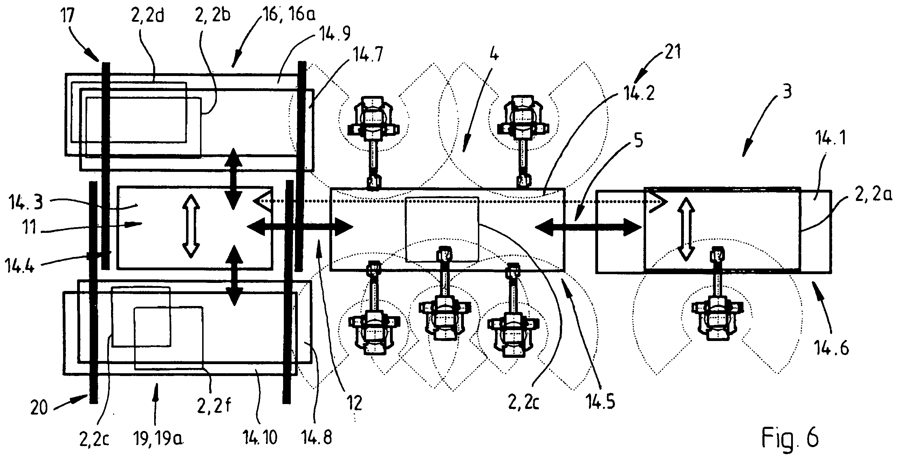

In der Figur 6 ist eine Ausführungsvariante eines erfindungsgemäßen Fertigungssystems 21 in Draufsicht gezeigt, welches für den Betrieb mit bis zu sechs unterschiedlichen Bautellträgem 2 bzw. 2a bis 2f ausgelegt ist. Hier wird zunächst auf die Beschreibungen zu den Figuren 1a bis 2f und 3a, 3b, 4 und 5 verwiesen. Bezüglich der Komponenten Beladeeinheit 3, Fügeeinheit 4, Transporteinheit 5, Hubeinheit 11, Transporteinhelt 12, Parkeinheit 16, Transporteinheit 17, zweite Parkeinheit 19 und vierte Transporteinheit 20 und der Möglichkelten eines Kreisbetriehs bzw. Pendelbetriebs wird besonders auf die Ausführungen zu der Figur 4 und 5 verwiesen. Im Unterschied zu dem in der Figur 5 gezeigten Fertigungssystem sind die Parkeinheiten 16 und 19 als Parkhäuser 16a und 19a ausgeführt und weisen jewells auf der Ebene E1 und der Ebene E2 einen Parkplatz auf, wobei die Parkplätze auf der Ebene E2 mit den Positionen 14.9 und 14.10 bezeichnet sind. Entsprechend sind auch die Transporteinheiten 17 und 20 derart ausgeführt, dass Bauteilträger 2 auf der Ebene E1 oder der Ebene E2 in die Parkeinheiten 16 und 19 eingeschleust oder ausgeschieust werden können.

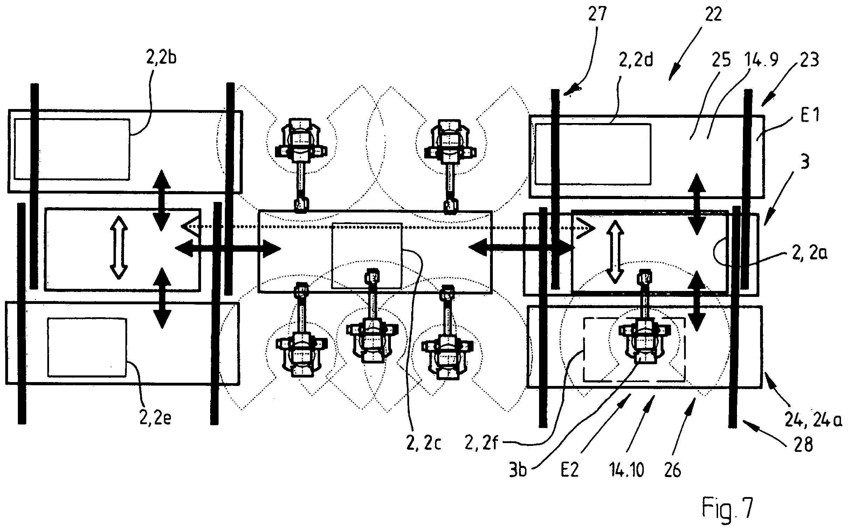

In der Figur 7 ist eine Ausführungsvariante eines erfindungsgemäßen Fertigungssystems 22 in Draufsicht dargestellt, welches ebenfalls wie das in der Figur 6 gezeigte Fertigungssystem für den Betrieb mit bis zu sechs verschiedenen Bauteilträgern 2 bzw. 2a bis 2f ausgelegt ist. Statt zusätzliche zwei Parkplätze durch die Ausbildung von Parkeinheiten als Doppelparkhäuser zu schaffen - wie dies in der Figur 5 ausgeführt ist - wird bei der Ausführungsvariante der Figur 6 zusätzlicher Parkraum dadurch geschaffen, dass einer Beladeeinheit 3 zwei Parkeinheit 23, 24 zugeordnet werden, wobei die Parkeinheit 23 einen Parkplatz 25 als Position 14.9 auf einer Arbeitsebene E1 zur Verfügung stellt und wobei die Parkeinheit 24 einen Parkplatz 26 als Position 14.10 auf einer Rückführebenen E2 zur Verfügung stellt. Hierbei ist die Parkeinheit 24 als Tiefparkeinheit 24a ausgebildet, welche unter einem Manipulator 3b der Beladeeinheit 3 angeordnet ist. Den Transport der jeweiligen Bauteilträger 2 in und aus den Parkeinheiten 23 und 24 übernehmen eine fünfte und eine sechste Transporteinheit 27 und 28. Bezüglich der nicht näher beschriebenen Komponenten des Fertigungssystems 22 wird ausdrücklich auch auf die Beschreibung zur Figur 5 verwiesen.

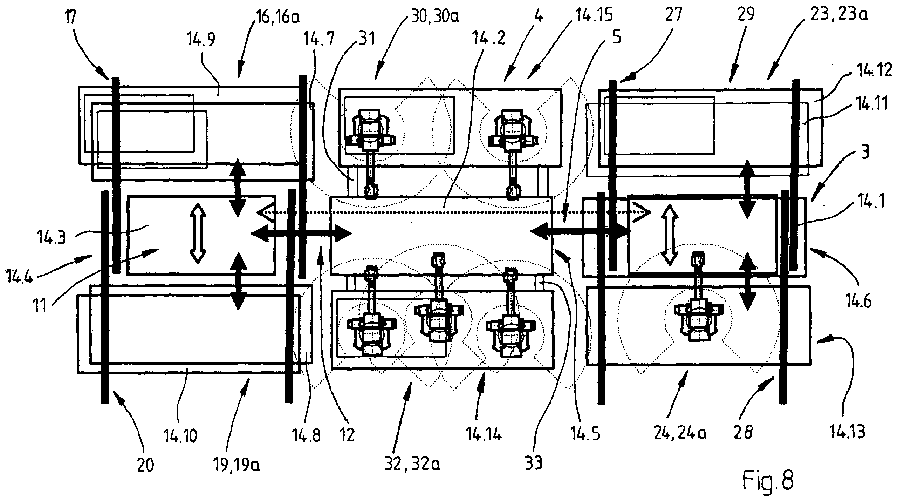

In der Figur 8 ist eine Ausführungsvariante eines erfindungsgemäßen Fertigungssystems 29 in Draufsicht gezeigt, welches für den Betrieb mit bis zu elf unterschiedlichen Bauteilträgern 2, 2a bis 2k ausgelegt ist Das Fertigungssystem 29 stellt eine Kombination der in den Figuren 6 und 7 gezeigten Fertigungssysteme dar und umfasst die folgenden Komponenten, welche aus den genannten Figuren 6 und 7 bzw. der zugehörigen Beschreibung bereits bekannt sind. Im Einzelnen sind dies: eine Beladeeinheit 3, eine Fügeeinheit 4, eine erste Transporteinheit 5, eine Hubeinheit 11, eine zweite Transporteinheit 12, einen erste Parkeinheit 16, welche als Parkhaus 16a ausgebildet ist, eine Transporteinheit 17, eine zweite Parkeinheit 19, welche als Parkhaus 19a ausgebildet ist, eine vierte Transporteinheit 20, eine Parkeinheit 23, welche als Parkhaus 23a ausgebildet ist, ein Transportsystem 27, eine Parkeinheit 24, welche als Tiefparkeinheit 24a ausgebildet ist, ein Transportsystem 28, eine Parkeinheit 30, welche als Tiefparkeinheit 30a ausgebildet ist, eine siebte Transporteinheit 31, eine Parkeinheit 32, welche als Tiefparkeinheit 32a ausgebildet ist und eine achte Transporteinheit 33. Die elf Bauteilträger 2 sind im Ausführungsbeispiel auf die Positionen 14.7, 14.9, 14.8, 14.10, 14.14, 14.2, 14.15, 14.13, 14.1, 14.11 und 14.12 verteilt.

Die Erfindung ist nicht auf dargestellte oder beschriebene Ausführungsbeispiele beschränkt. Sie umfasst vielmehr jegliche Weiterbildungen der Erfindung im Rahmen der Schutzrechtsansprüche. Insbesondere ist es vorgesehen die Fügeroboter als Schweißroboter auszubilden.

### Bezugszeichenliste:

- 1: Fertigungssystem
- 2: Bauteilträger, Spann- bzw. Geometrievorrichtung
- 3: Beladeeinheit
- 3a: Tisch
- 3b: Manipulator
- 4: Fügeeinheit
- 4a: Tisch
- 4b: Manipulator
- 4c - 4f: Fügeroboter
- 4g: Tunnel
- 5: Transporteinheit
- 6a, 6b: Bauteilen
- 7: Struktur
- 7': weitere Struktur
- 8: Geo-Verbindungen
- 9: Greifer
- 10: Fertigungssystem
- 11: Hubeinheit
- 12: Transporteinheit
- 15: Fertigungssystem
- 16: Parkeinheit
- 16a: Parkhaus
- 17: 3. Transporteinheit
- 18: Fertigungssystem
- 19: Parkeinheit
- 19a: Parkhaus
- 20: 4. Transporteinheit
- 21: Fertigungssystem
- 22: Fertigungssystem
- 23: Parkeinheit
- 23a: Parkhaus
- 24: Parkeinheit
- 24a: Tiefparkeinheit
- 25: Parkplatz
- 26: Parkplatz
- 27, 28: 5. und 6. Transporteinheit
- 29: Fertigungssystem
- 30: Parkeinheit
- 30a: Tiefparkeinheit
- 31: 7. Transporteinheit
- 32: Parkeinheit
- 32a: Tiefparkeinheit
- 33: 8. Transporteinheit

- E1: Arbeitsebene
- E2: Rückführebene
- H1: Höhe
- I: Geo-Niveau
- II: Ausfüge-Niveau
- III: Fertigfüge-Position
- x, x': Pfeilrichtung
- y, y': Pfeilrichtung
- z, z': Pfeilrichtung
- 14.1 - 14.15: Positionen für 2

## Patentansprüche

1. Verfahren zum Betrieb eines Fertigungssystems (1, 10, 15, 18, 21, 22, 29) zum Fügen, Transportieren und Handhaben von vormontierten Strukturen (7, 7'), insbesondere von Kraftfahrzeugkarosseriebaugruppen, welche durch zuvor lose montierte Bauteile (6a, 6b) gebildet sind, umfassend:
- einen ersten Bauteilträger (2) zur Aufnahme einer ersten Art von vormontierten Strukturen (7; 7');
- eine Beladeeinheit (3), welche einen ersten Manipulator (3b) umfasst, wobei die erste vormontierte Struktur (7) in der Beladeeinheit (3) von dem ersten Manipulator (3b) auf den Bauteilträger (2) gesetzt wird,
- eine Fügeeinheit (4), welche wenigstens einen Fügeroboter (4c - 4f) umfasst, mit welchem die erste vormontierte Struktur (7) zusammengefügt wird und
- eine Transporteinheit (5), durch welche der Bauteilträger (2) zwischen der Beladeeinheit (3) und der Fügeeinheit (4) bewegbar ist,
- wobei die Transporteinheit (5) den mit der ersten vormontierten Struktur (7) bestückten Bauteilträger (2) in die Fügeeinheit (4) transportiert und
- wobei in der Fügeeinheit (4) Geo-Verbindungen (8) der ersten vormontierten Struktur (7) durch den oder die Fügeroboter (4c - 4f) hergestellt werden,
- wobei die Fügeeinheit (4) einen zweiten Manipulator (4b) umfasst, welcher die vormontierte Struktur (7) nach dem Fügen der Geo-Verbindungen (8) durch den oder die Fügeroboter (4c - 4f) von dem Bauteilträger (2) abhebt,
- wobei die Transporteinheit (5) den Bauteilträger (2) in die Beladeeinheit (3) zurückfördert während der bzw. die selben Fügeroboter (4c - 4f) Ausfüge-Verbindungen herstellt bzw. herstellen,
- wobei hierzu die durch die Geo-Verbindungen stabilisierte Struktur (7) von dem Manipulator (4b) in Pfeilrichtung (z) von dem Tisch (4a) der Fügestation (4) von einem Geo-Niveau I auf ein Ausfüge-Niveau II um eine Höhe H1 in eine Fertigfüge-Position III angehoben wird,
- wobei es durch ein Fertigfügen der Struktur (7) in einer Schwebeposition möglich ist, den Bauteilträger (2) vor dem Ende der Fügeoperation aus der Fügeeinheit (4) zu entnehmen und in der Beladeeinheit (3) wieder zu bestücken,
- wobei der Bauteilträger (2) in der Beladeeinheit (3) von dem ersten Manipulator (3b) mit einer zweiten vormontierten Struktur (7') bestückt wird und
- wobei der zweite Manipulator (4b) die fertig gefügte Struktur (7) aus dem Fertigungssystem (1, 10, 15, 18, 21, 22, 29) entlädt bevor der neu bestückte Bauteilträger (2) mit der zweiten vormontierten Struktur (7') in die Fügeeinheit (4) eingefahren wird
**dadurch gekennzeichnet, dass** die Fügeeinheit (4) zwischen der Beladeeinheit (3) und einer Hubeinheit (11) angeordnet ist und das Fertigungssystem (1, 10, 15, 18, 21, 22, 29) wenigstens einen zweiten Bauteilträger (2) zur Aufnahme einer zweiten Art bzw. weiteren Arten von vormontierten Strukturen (7, 7') aufweist,
wobei einer der Bauteilträger (2)
- aus einer Arbeitsebene (E1), in welcher die Geo-Verbindungen (8) erstellt werden, herausbewegt wird und unter oder über der Arbeitsebene (E1) in einer Rückführebene (E2) insbesondere durch einen Tunnel (4g) der Fügeeinheit (4) von der Hubeinheit (11) zu der Beladeeinheit (3) gefördert wird und wobei die Beladeeinheit (3) zur Übernahme des rückgeförderten Bauteilträgers (2) in die Rückführebene (E2) angehoben oder abgesenkt wird,
- wobei der Hubeinheit (11) wenigstens eine Parkeinheit (16, 19) zugeordnet ist, in welche einer der Bauteilträger (2) bei Nicht-Bedarf auf der Arbeitsebene (E1) und/oder auf der Rückführebene (E2) aus einem Bauteilträgerkreislauf ausgeschleust wird und/oder aus welcher einer der Bauteilträger (2) bei Bedarf auf der Arbeitsebene (E1) und/oder auf der Rückführebene (E2) in einen Bauteilträgerkreislauf eingeschleust wird.

2. Verfahren nach Anspruch 1, **dadurch gekennzeichnet, dass** das Fertigungssystem (1, 10, 15, 18, 21, 22, 29) wenigstens eine Parkeinheit (23, 30, 32) umfasst, die als Tiefparkeinheit (24a, 30a, 32a) ausgebildet ist, welche insbesondere unter dem ersten Manipulator (3b) und/oder insbesondere unter dem zweiten Manipulator (4b) und/oder insbesondere unter einem der Fügeroboter (4c - 4f) angeordnet ist, wobei einer der Bauteilträger (2) bei Nicht-Bedarf auf der Rückführebene (E2) aus einem Bauteilträgerkreislauf in die Tiefparkeinheit (24a, 30a, 32a) ausgeschleust wird und/oder wobei einer der Bauteilträger (2) bei Bedarf auf der Rückführebene (E2) aus der Tiefparkeinheit (24a, 30a, 32a) in den Bauteilträgerkreislauf eingeschleust wird.

3. Fertigungssystem (1, 10, 15, 18, 21, 22, 29) zum Fügen, Transportieren und Handhaben von vormontierten Strukturen (7, 7'), insbesondere von Kraftfahrzeugkarosseriebaugruppen, welche durch zuvor lose montierte Bauteile (6a, 6b) gebildet sind, umfassend:
- einen ersten Bauteilträger (2) zur Aufnahme einer ersten Art von vormontierten Strukturen (7, 7');
- eine Beladeeinheit (3), welche einen ersten Manipulator (3b) umfasst, wobei die erste vormontierte Struktur (7) in der Beladeeinheit (3) von dem ersten Manipulator (3b) auf den Bauteilträger (2) gesetzt wird,
- eine Fügeeinheit (4), welche wenigstens einen Fügeroboter (4b) umfasst, mit welchem die erste vormontierte Struktur (7) zusammengefügt wird und
- eine Transporteinheit (5), durch welche der Bauteilträger (2) zwischen der Beladeeinheit (3) und der Fügeeinheit (4) bewegbar ist,
- wobei die Transporteinheit (5) den mit der ersten vormontierten Struktur (7) bestückten Bauteilträger (2) in die Fügeeinheit (4) transportiert und
- wobei in der Fügeeinheit (4) Geo-Verbindungen (8) der ersten vormontierten Struktur (7) durch den oder die Fügeroboter (4c - 4f) hergestellt werden,
- wobei die Fügeeinheit (4) einen zweiten Manipulator (4b) umfasst, durch welchen die vormontierte Struktur (7) nach dem Fügen der Geo-Verbindungen (8) durch den oder die Fügeroboter (4c - 4f) von dem Bauteilträger (2) abhebbar ist,
wobei
- die vormontierte Struktur (7) in eine Fertigfüge-Position (III) abhebbar ist und
- wobei der Bauteilträger (2) aus der Fügeeinheit (4) in die Beladeeinheit (3) zurückförderbar ist während der bzw. die selben Fügeroboter (4a - 4f) Ausfüge-Verbindungen daran herstellt bzw. herstellen, während der Bauteilträger (2) aus der Fügeeinheit (4) in die Beladeeinheit (3) zurückförderbar ist,
**dadurch gekennzeichnet, dass** die Fügeeinheit (4) zwischen der Beladeeinheit (3) und einer Hubeinheit (11) angeordnet ist und das Fertigungssystem (1, 10, 15, 18, 21, 22, 29) wenigstens einen zweiten Bauteilträger (2) zur Aufnahme einer zweiten Art bzw. weiteren Arten von vormontierten Strukturen (7, 7') aufweist,
- wobei einer der Bauteilträger (2) aus einer Arbeitsebene (E1), in welcher die Geo-Verbindungen (8) erstellt werden, herausbewegbar ist und unter oder über der Arbeitsebene (E1) in einer Rückführebene (E2) von der Hubeinheit (11) zu der Beladeeinheit (3) förderbar ist und
- wobei die Beladeeinheit (3) zur Übernahme des rückgeförderten Bauteilträgers (2) in die Rückführebene (E2) anhebbar oder absenkbar ist,
- wobei das Fertigungssystem (1, 10, 15, 18, 21, 22, 29) wenigstens eine Parkeinheit (16, 19) umfasst,
welche benachbart zu der Hubeinheit (11) angeordnet ist und auf der Arbeitsebene (E1) und/oder auf der Rückführebene (E2) einen Parkplatz für einen der Bauteilträger (2) aufweist, wobei einer der Bauteilträger (2) bei Nicht-Bedarf aus einem Bauteilträgerkreislauf auf einen der Parkplätze ausschleusbar ist und/oder wobei einer der Bauteilträger (2) bei Bedarf in einen Bauteilträgerkreislauf eingeschleusbar ist.

4. Fertigungssystem (1, 10, 15, 18, 21, 22, 29) nach Anspruch 3, **dadurch gekennzeichnet, dass** das Fertigungssystem (1, 10, 15, 18, 21, 22, 29) wenigstens eine Parkeinheit (23, 30, 32) umfasst, die als Tiefparkeinheit (24a, 30a, 32a) ausgebildet ist, welche insbesondere unter dem ersten Manipulator (3b) und/oder insbesondere unter dem zweiten Manipulator (4b) und/oder insbesondere unter einem der Fügeroboter (4c - 4f) angeordnet ist, wobei einer der Bauteilträger (2) bei Nicht-Bedarf auf der Rückführebene (E2) aus einem Bauteilträgerkreislauf in die Tiefparkeinheit (24a, 30a, 32a) ausschleusbar ist und/oder wobei einer der Bauteilträger (2) bei Bedarf auf der Rückführebene (E2) aus der Tiefparkeinheit (24a, 30a, 32a) in den Bauteilträgerkreislauf einschleusbar ist.

## Claims

1. A method for operating a manufacturing system (1, 10, 15, 18, 21, 22, 29) for joining, transporting and handling preassembled structures (7, 7'), in particular motor vehicle body subassemblies, which are formed by components (6a, 6b) which are mounted loosely beforehand, comprising:
- a first component carrier (2) for receiving a first type of preassembled structures (7, 7')
- a loading unit (3) which comprises a first manipulator (3b), wherein the first preassembled structure (7) is placed by the first manipulator (3b) onto the component carrier (2) in the loading unit (3),
- a joining unit (4), which comprises at least one joining robot (4c - 4f) with which the first preassembled structure (7) is joined together, and
- a transport unit (5) by means of which the component carrier (2) is movable between the loading unit (3) and the joining unit (4),
- wherein the transport unit (5) transports the component carrier (2), which is equipped with the first preassembled structure (7) into the joining unit (4) and
- wherein geo-connections (8) of the first preassembled structure (7) are produced in the joining unit (4) by the joining robot or the joining robots (4c - 4f),
- wherein the joining unit (4) comprises a second manipulator (4b), which lifts the preassembled structure (7) off the component carrier (2) after the joining of the geo-connections (8) by the joining robot or the joining robots (4c - 4f),
- wherein the transport unit (5) conveys the component carrier (2) back to the loading unit (3) while the joining robot or the same joining robots (4c - 4f) produces or produce welded joining-connections
- wherein for this purpose the structure (7) stabilized by the geo-connections is lifted by the manipulator (4b) in the direction of the arrow (z) off the table (4a) of the joining station (4) from a geo-level I to a welded joining-level II by a height H1 into a completed joining- position III,
- wherein it is possible through a completed joining of the structure (7) in a float position to remove the component carrier (2) from the joining unit (4) before the end of the joining operation and to load it again in the loading unit (3),
- wherein the component carrier (2) is equipped in the loading unit (3) by the first manipulator (3b) with a second preassembled structure (7') and
- wherein the second manipulator (4b) unloads the completed joined structure (7) from the manufacturing system (1, 10,15, 18, 21, 22, 29) before the newly equipped component carrier (2) is driven with the second preassembled structure (7') into the joining unit (4).
**characterized in that** the joining unit (4) is arranged between the loading unit (3) and a lifting unit (11) and the manufacturing system (1, 10, 15, 18, 21, 22, 29) has at least a second component carrier (2) for receiving a second type or additional types of preassembled structures (7, 7'),
- wherein one of the component carriers (2) is moved out of a working plane (E1), in which the geo-connections (8) are created, and is conveyed below or above the working plane (E1) in a return plane (E2) in particular through a tunnel (4g) of the joining unit (4) from the lifting unit (11) to the loading unit (3) and wherein the loading unit (3) is lifted or lowered for transferring the returned component carrier (2) into the return plane (E2).
- wherein the lifting unit (11) is assigned at least one parking unit (16, 19), in which one of the component carriers (2) is discharged when not required on the working plane (E1) and/or on the return plane (E2) from a component carrier cycle and/or from which one of the component carriers (2) when required on the working plane (E1) and/or on the return plane (E2) is introduced into a component carrier cycle.

2. A method according to Claim 1, **characterized in that** the manufacturing system (1, 10, 15, 18, 21, 22, 29) comprises at least one parking unit (23, 30, 32), which is designed as a low-parking unit (24a, 30a, 32a), which is arranged in particular under the first manipulator (3b) and/or in particular under the second manipulator (4b) and/or in particular under one of the joining robots (4c - 4f), wherein one of the component carriers (2) when not required on the return plane (E2) is discharged from a component carrier cycle into the low-parking unit (24a, 30a, 32a) and/or wherein one of the component carriers (2) when required on the return plane (E2) is introduced from the low-parking unit (24a, 30a, 32a) into the component carrier cycle.

3. A manufacturing system (1, 10, 15, 18, 21, 22, 29) for joining, transporting and handling preassembled structures (7, 7'), in particular motor vehicle body subassemblies, which are formed by components (6a, 6b) which are mounted loosely beforehand, comprising:
- a first component carrier (2) for receiving a first type of preassembled structures (7, 7')
- a loading unit (3) which comprises a first manipulator (3b), wherein the first preassembled structure (7) is placed by the first manipulator (3b) onto the component carrier (2) in the loading unit (3),
- a joining unit (4), which comprises at least one joining robot (4b) with which the first preassembled structure (7) is joined together, and
- a transport unit (5) by means of which the component carrier (2) is movable between the loading unit (3) and the joining unit (4),
- wherein the transport unit (5) transports the component carrier (2), which is equipped with the first preassembled structure (7) into the joining unit (4) and
- wherein geo-connections (8) of the first preassembled structure (7) are produced in the joining unit (4) by the joining robot or the joining robots (4c - 4f),
- wherein the joining unit (4) comprises a second manipulator (4b), by which the preassembled structure (7) can be lifted off the component carrier (2) after the joining of the geo-connections (8) by the joining robot or the joining robots (4c - 4f),
wherein
- the preassembled structure (7) can be lifted into a completed joining-position (III) and
- the joining robot or the same joining robots (4c - 4f) produces or produce welded joining-connections thereon, while the component carrier (2) can be returned from the joining unit (4) into the loading unit (3),
**characterized in that** the joining unit (4) is arranged between the loading unit (3) and a lifting unit (11) and the manufacturing system (1, 10, 15, 18, 21, 22, 29) has at least a second component carrier (2) for receiving a second type or additional types of preassembled structures (7, 7'),
- wherein one of the component carriers (2) can be moved out of a working plane (E1), in which the geo-connections (8) are created and can be conveyed below or above the working plane (E1) in a return plane (E2) from the lifting unit (11) to the loading unit (3) and
- wherein the loading unit (3) can be lifted or lowered for transferring the returned component carrier (2) into the return plane (E2)
- wherein the manufacturing system (1, 10, 15, 18, 21, 22, 29) comprises at least one parking unit (16, 19), which is arranged adjacent to the lifting unit (11) and on the working plane (E1) and/or on the return plane (E2) has a parking space for one of the component carriers (2), wherein one of the component carriers (2) when not required can be discharged from a component carrier cycle to one of the parking spaces and/or wherein one of the component carriers (2) when required can be introduced into a component carrier cycle.

4. A manufacturing system (1, 10, 15, 18, 21, 22, 29) according to claim 3, **characterized in that** the manufacturing system (1, 10, 15, 18, 21, 22, 29) comprises at least one parking unit (23, 30, 32), which is designed as a low-parking unit (24a, 30a, 32a), which is arranged in particular under the first manipulator (3b) and/or in particular under the second manipulator (4b) and/or in particular under one of the joining robots (4c - 4f), wherein one of the component carriers (2) when not required on the return plane (E2) can be discharged from a component carrier cycle into the low-parking unit (24a, 30a, 32a) and/or wherein one of the component carriers (2) when required on the return plane (E2) can be introduced from the low-parking unit (24a, 30a, 32a) into the component carrier cycle.

## Revendications

1. Procédé d'exploitation d'un système de fabrication (1, 10, 15, 18, 21, 22, 29) pour l'assemblage, le transport et la manipulation de structures pré-montées (7, 7'), plus particulièrement de sous-ensembles de carrosseries de véhicules automobiles, qui ont d'abord constitués de composants montés séparément (6a, 6b), comprenant :
- un premier support de composant (2) pour le logement d'un premier type de structures pré-montées (7 ; 7') ;
- une unité de chargement (3) qui comprend un premier manipulateur (3b), la première structure pré-montée (7) étant placée dans l'unité de chargement (3) par le premier manipulateur (3b) sur le support de composant (2),
- une unité d'assemblage (4) qui comprend au moins un robot d'assemblage (4c -4f), avec lequel la première structure pré-montée (7) est assemblée et
- une unité de transport (5) à l'aide de laquelle le support de composant (2) peut être déplacé entre l'unité de chargement (3) et l'unité d'assemblage (4),
- l'unité de transport (5) transportant le support de composant (2), équipé de la première structure pré-montée (7), vers l'unité d'assemblage (4) et
- dans l'unité d'assemblage (4), des liaisons Géo (8) de la première structure pré-montée (7) étant établies à l'aide du ou des robots d'assemblage (4c - 4f),
- l'unité d'assemblage (4) comprenant un deuxième manipulateur (4b) qui soulève la structure pré-montée (7) après l'assemblage des liaisons Géo (8) par le ou les robots d'assemblage (4c - 4f) par le support de composant (2),
- l'unité de transport (5) transportant à nouveau le support de composant (2) vers l'unité de chargement (3) pendant que le ou les mêmes robots d'assemblage (4c - 4f) établissent des liaisons d'assemblage,
- pour cela, la structure (7) stabilisée par les liaisons Géo, est soulevée par le manipulateur (4b) dans la direction de la flèche (z), de la table (4a), de la station d'assemblage (4), d'un niveau Géo I à un niveau d'assemblage II, d'une hauteur H1 vers une position d'assemblage final III,
- un assemblage de la structure (7) dans une position de suspension étant possible, pour retirer le support de composant (2) de l'unité d'assemblage (4) avant l'opération d'assemblage et pour l'équiper à nouveau dans l'unité de chargement (3),
- le support de composant (2) étant équipé dans l'unité de chargement (3) par le premier manipulateur (3b) avec une deuxième structure pré-montée (7') et
- le deuxième manipulateur (4b) déchargeant la structure assemblée (7) du système de fabrication (1, 10, 15, 18, 21, 22, 29) avant que le support de composant (2) nouvellement équipé soit rentré avec la deuxième structure pré-montée (7') dans l'unité d'assemblage (4),
**caractérisé en ce que** l'unité d'assemblage (4) est disposée entre l'unité de chargement (3) et une unité de levage (11) et le système de fabrication (1, 10, 15, 18, 21, 22, 29) comprend au moins un deuxième support de composant (2) pour le logement d'un deuxième type ou d'un autre type de structures pré-montées (7, 7'),
- un des supports de composants (2) étant déplacé d'un plan de travail (E1), dans lequel les liaisons Géo (8) sont établies et est déplacé en dessous ou au-dessus du plan de travail (E1) vers un plan de retour (E2), plus particulièrement à travers un tunnel (4g) de l'unité d'assemblage (4) de l'unité de levage (11) vers l'unité de chargement (3) et l'unité de chargement (3) étant soulevée ou abaissée pour la prise en charge du support de composant (2) dans le plan de retour (E2),
- l'unité de levage (11) correspond au moins une unité de stationnement (16, 19), dans laquelle un des supports de composants (2) est sorti lorsqu'il n'est pas nécessaire sur le plan de travail (E1) et/ou sur le plan de retour (E2) hors d'un circuit de supports de composants, et/ou hors duquel un des supports de composants (2) est introduit, si nécessaire, sur le plan de travail (E1) et/ou sur le plan de retour (E2) dans un circuit de supports de composants.

2. Procédé selon la revendication 1, **caractérisé en ce que** le système de fabrication (1, 10, 15, 18, 21, 22, 29) comprend au moins une unité de stationnement (23, 30, 32) qui est conçue comme une unité de stationnement inférieure (24a, 30a, 32a), qui est disposée plus particulièrement sous le premier manipulateur (3b) et/ou plus particulièrement sous le deuxième manipulateur (4b) et/ou plus particulièrement sous un des robots d'assemblage (4c - 4f), un des supports de composants (2) étant sortie, lorsqu'il n'est pas nécessaire sur le plan de retour (E2), hors d'un circuit de supports de composants vers l'unité de stationnement inférieure (24a, 30a, 32a) et/ou un des supports de composants (2) est introduit, lorsqu'il est nécessaire sur le plan de retour (E2), de l'unité de stationnement inférieure (24a, 30a, 32a) vers le circuit de supports de composants.

3. Système de fabrication (1, 10, 15, 18, 21, 22, 29) pour l'assemblage, le transport et la manipulation de structures pré-montées (7, 7'), plus particulièrement de sous-ensembles de carrosseries de véhicules automobiles, qui sont constitués de composants (6a, 6b) d'abord montés séparément, comprenant :
- un premier support de composant (2) pour le logement d'un premier type de structures pré-montées (7, 7') ;
- une unité de chargement (3), qui comprend un premier manipulateur (3b), la première structure pré-montée (7) étant placée dans l'unité de chargement (3) par le premier manipulateur (3b) sur le support de composant (2),
- une unité d'assemblage (4) qui comprend au moins un robot d'assemblage (4b), avec lequel la première structure pré-montée (7) est assemblée et
- une unité de transport (5), à l'aide de laquelle le support de composant (2) peut être déplacé entre l'unité de chargement (3) et l'unité d'assemblage (4),
- l'unité de transport (5) transportant le support de composant (2) équipé de la structure pré-montée (7) vers l'unité d'assemblage (4) et
- dans l'unité d'assemblage (4), des liaisons géo (8) de la première structure pré-montée (7) étant établies par le ou les robots d'assemblage (4c - 4f),
- l'unité d'assemblage (4) comprenant un deuxième manipulateur (4b) à l'aide duquel la structure pré-montée (7) peut être soulevée après l'assemblage des liaisons géo (8) par le ou les robots d'assemblage (4c - 4f) par le support de composant (2),
- la structure pré-montée (7) peut être soulevée vers une position d'assemblage final (III) et
- le ou les mêmes robots d'assemblage (4c - 4f) y établissent des liaisons d'assemblage pendant que le support de composant (2) peut être transporté hors de l'unité d'assemblage (4) vers l'unité de chargement (3) **caractérisé en ce que** l'unité d'assemblage (4) est disposée entre l'unité de chargement (3) et une unité de levage (11) et le système de fabrication (1, 10, 15, 18, 21, 22, 29) comprend au moins un deuxième support de composant (2) pour le logement d'un deuxième type ou d'un autre type de structures pré-montées (7, 7'),
- un des supports de composants (2) pouvant être déplacé d'un plan de travail (E1), dans lequel les liaisons Géo (8) sont établies, peut être déplacé en dessous ou au-dessus du plan de travail (E1) dans un plan de retour (E2) de l'unité de levage (11) vers l'unité de chargement (3) et
- l'unité de chargement (3) pouvant être soulevée ou abaissée pour la prise en charge du support de composant (2) vers le plan de retour (E2)
- le système de fabrication (1, 10, 15, 18, 21, 22, 29) comprend au moins une unité de stationnement (16, 19), qui est disposée à proximité de l'unité de levage (11) et comprend, sur le plan de travail (E1) et/ou sur le plan de retour (E2), un emplacement de stationnement pour un des supports de composants (2), un des supports de composants (2) pouvant être sorti d'un circuit de supports de composants vers un des emplacements de stationnement lorsqu'il n'est pas nécessaire et/ou un des supports de composants (2) pouvant être introduit dans un circuit de supports de composants lorsqu'il est nécessaire.

4. Système de fabrication (1, 10, 15, 18, 21, 22, 29) selon la revendication 3, **caractérisé en ce que** le système de fabrication (1, 10, 15, 18, 21, 22, 29) comprend au moins une unité de stationnement (23, 30, 32), qui est conçue comme une unité de stationnement inférieure (24a, 30a, 32a), qui est disposée plus particulièrement sous le premier manipulateur (3b) et/ou plus particulièrement sous le deuxième manipulateur (4b) et/ou plus particulièrement sous un des robots d'assemblage (4c - 4f), un des supports de composants (2) pouvant être sorti hors d'un circuit de supports de composants vers l'unité de stationnement inférieure (24a, 30a, 32a) lorsqu'il n'est pas nécessaire dans le plan de retour (E2) et/ou un des supports de composants (2) pouvant être introduit de l'unité de stationnement inférieure (24a, 30a, 32a) vers le circuit de supports de composants lorsqu'il est nécessaire sur le plan de retour (E2).
